# EUROPÄISCHE PATENTSCHRIFT

(11) **EP 0 640 429 B1**
(45) Veröffentlichungstag und Bekanntmachung des Hinweises auf die Patenterteilung: **25.09.1996**
(21) Anmeldenummer: 94111290.6
(22) Anmeldetag: 20.07.1994
(51) Int. Cl.: B23K 11/31, F15B 15/20

(54) **Pneumatikantrieb, insbesondere für die Betätigung von Schweisselektroden**
Pneumatic drive in particular for actuating welding electrodes
Entraînement pneumatique en particulier pour l'actionnement d'électrodes de soudage

(30) Priorität: 26.08.1993 DE 4328741
(43) Veröffentlichungstag der Anmeldung: 01.03.1995
(73) Patentinhaber: Kolben-Seeger GmbH & Co KG, D-65760 Eschborn (DE)
(72) Erfinder: Ganninger, Walter, D-61 462 Königstein/Ts (DE)
(74) Vertreter: Wolf, Günter, Dipl.-Ing.

(56) Entgegenhaltungen:
- DE-A- 2 327 488
- DE-A- 4 012 968
- DE-C- 3 430 256

## Beschreibung

Die Erfindung betrifft einen Pneumatikantrieb, insbesondere für die Betätigung von Schweißelektroden, gemäß Oberbegriff des Patentanspruches 1.

Ein derartiger Pneumatikantrieb ist bspw. nach der DE-A-35 42 069 bekannt. Die im Bereich der Trennwand angeordnete Ventilsteuerung ragt dabei zum Teil seitlich aus dem Zylinder heraus. In Anlehnung an die DE-A-31 25 081 ist dies bei einem Pneumatikantrieb nach der DE-A-40 12 968 vermieden, wobei seitlich in der Trennwand (Zwischenboden) und im Anordnungsbereich des Schnellentlüftungs- und Rückhubanschlusses ein kleiner, kolbenbetätigter Schieber angeordnet ist, der diesen Anschluß öffnet oder schließt. Zusätzlich muß in der Trennwand eine Drossel eingebaut werden, durch die das oberhalb der Trennwand befindliche Druckmedium beim gedämpften Absenken über einen Ringkanal bei entsprechender Schieberstellung gedrosselt abströmt. Außerdem ist der oberhalb der Trennwand angeordnete Kolben verschieblich auf der Kolbenstange angeordnet und gegen diese mit einer Druckfeder vorgespannt. Ebenfalls verschieblich aber ohne Druckfeder sitzt der entsprechende Kolben nach der DE-A-35 42 069 auf der Kolbenstange.

Der Erfindung liegt die Aufgabe zugrunde, den Pneumatikantrieb bei wesentlich einfacherer Konstruktion und damit entsprechend kostengünstiger zu gestalten, wobei sämtliche inneren Ventil- und Drosselfunktionen an einem Element zusammengefaßt sein sollen.

Diese Aufgabe ist mit einem Pneumatikantrieb der eingangs genannten Art nach der Erfindung durch die im Kennzeichen des Patentanspruches 1 angeführten Merkmale gelöst.

Wie noch näher zu erläutern sein wird, sind hierbei die "inneren" Umschaltfunktionen vorteilhaft allein auf die Ventilhülse konzentriert, die ein konzentrisch auf der Kolbenstange verschieblich sitzendes einfaches Drehteil darstellt, das gleichzeitig auch die Drossel bzw. die Drosselleitung enthält.

Konstruktiv vorteilhafte Ausgestaltungen bestehen in Folgendem:
Der Anschlag für die Ventilhülse ist auf der Seite des Druckraumes in Form eines in der Trennwand eingesetzten Sprengringes ausgebildet, der einfach in eine entsprechende Nut der Trennwand eingesetzt wird, nachdem die Ventilhülse in der Trennwand eingesetzt ist. Die Ventilhülse selbst ist bis zum Dichtungsflansch zylindrisch ausgebildet und an deren unteren Endbereich sind die Dichtung zur Kolbenstange und die Dichtung zur Trennwand in entsprechenden Nuten angeordnet. Ferner ist im Dichtungsflansch der Ventilhülse zur Seite des Anschlages hin eine O-Ring-Dichtung angeordnet, wobei der Anschlag gleichzeitig den ringförmigen Ventilsitz für die O-Ring-Dichtung bildet. Schließlich ist noch in der Ventilhülse auf der Seite des Druckraumes eine ringförmige Ausnehmung angeordnet, von der aus die Drosselleitung als Schrägbohrung zum Überströmraum geführt ist, wodurch die Einbringung der Drosselleitung bei der Fertigung vereinfacht wird.

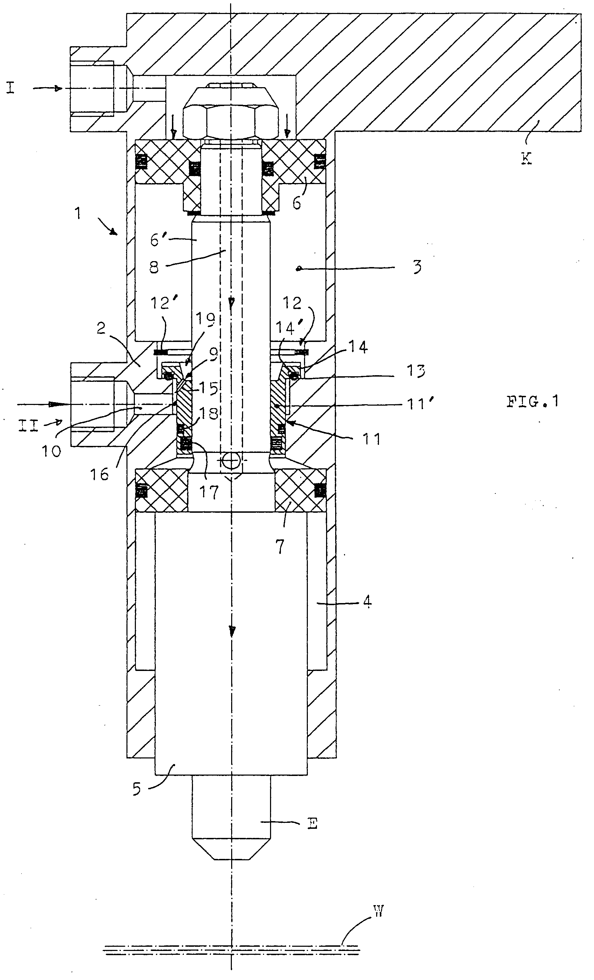

Der erfindungsgemäße Pneumatikantrieb wird nachfolgend anhand der zeichnerischen Darstellung eines Ausführungsbeispieles näher erläutert, das in den Fig. 1 bis 3 im Schnitt in verschiedene Stellungen, nämlich Ausgangsposition, Zwischenposition und Anlageposition am Werkstück verdeutlicht ist.

Der Pneumatikantrieb besteht in bekannter Weise aus einem Zylinder 1 mit ventilgesteuerten Betriebsmittelzu- und -abfuhranschlüssen, in dessen durch eine Trennwand 2 in zwei Druckräume 3, 4 gegliedertem Innenraum getrennt voneinander zwei an einer gemeinsamen, am freien Ende mit einer Werkzeugaufnahme 5 versehenen Kolbenstange 6' sitzende Kolben 6, 7 angeordnet sind. Die beiden Druckräume 3, 4 sind für den Vorschub durch einen Kanal 8 in der Kolbenstange 6' miteinander verbunden. Im Bereich der Trennwand 2 ist eine mit einer Drossel 9 versehene, ventilgesteuerte und zum an der Trennwand 2 angeordneten Schnellentlüftungs- und Rückhubanschluß 10 führende Leitung angeordnet. Nicht dargestellt sind die "äußeren" Ventile an den Betriebsmittelzu- und -abfuhranschlüssen I, II.

Wie dargestellt, ist für einen solchen Pneumatikantrieb wesentlich, daß in der Trennwand 2, gegen diese abgedichtet, eine die Kolbenstange 6' abgedichtet umfassende, begrenzt verschiebliche Ventilhülse 11 mit einem zwischen zwei Anschlägen 12, 13 an der Trennwand 2 beweglichen Dichtungsflansch 14 auf der Seite des ersten Druckraumes 3 angeordnet ist. In der Hülse 11 ist eine Drosselleitung 15 zwischen dem ersten Druckraum 3 und einem zylindrischen Teil 11' der Hülse 11 und der Trennwand 2 begrenzten Überströmraum 16, unterhalb des Dichtungsflansches 14 ausmündend, angeordnet. In den Überströmraum 16 mündet der Schnellentlüftungs- und Rückhubanschluß 10 unterhalb des Dichtungsflansches 14 aus. Der Anschlag 12 auf der Seite des Druckraumes 3 ist in Form eines in der Trennwand 2 eingesetzten Sprengringes 12' ausgebildet. Die Ventilhülse 11 ist bis auf den ringzylindrischen Dichtungsflansch 14 ein einfacher von der Kolbenstange 6' durchgriffener zylindrischer Körper mit Ringnuten für die Dichtungen 17, 18 im Endbereich des zylindrischen Teiles 11' der Hülse 11. Diese Dichtungen 17, 18 dienen zur Abdichtung einerseits gegen die Kolbenstange 6' und andererseits gegen die Trennwand 2. Ferner ist im Dichtungsflansch 14 zur Seite des Anschlages 13 hin eine O-Ring-Dichtung 14' angeordnet, für die der Anschlag 13 den Ventilsitz bildet. Außerdem ist in der Ventilhülse 11 auf der Seite des Druckraumes 3 eine ringförmige Ausnehmung 19 angeordnet, von der aus die Drosselleitung 15 als schrägbohrung zum Überströmraum 16 führt.

Allein schon die Schnittdarstellungen der Fig. 1 bis 3 machen die übersichtliche und damit entsprechend einfache Gestaltung des ganzen Antriebes deutlich, der auch einer denkbar einfachen Montage zugänglich ist. Abgesehen davon ist hier jedoch der Zylinder mit seinem oberen Kopfstück vereinfacht dargestellt, d.h. die Druckräume 3, 4 sind, wie dies üblich ist, von Kolbenlaufbüchsen begrenzt, zwischen denen die Trennwand 2 als separates Teil sitzt. Diese ganze "Einheit" einschließlich der Ventilhülse 11 und der Kolbenstange 6' mit den fest daran angeordneten Kolben 6, 7 wird dann einfach in einen Außenzylinder, zu dem auch das Kopfstück K gehört, eingeschoben.

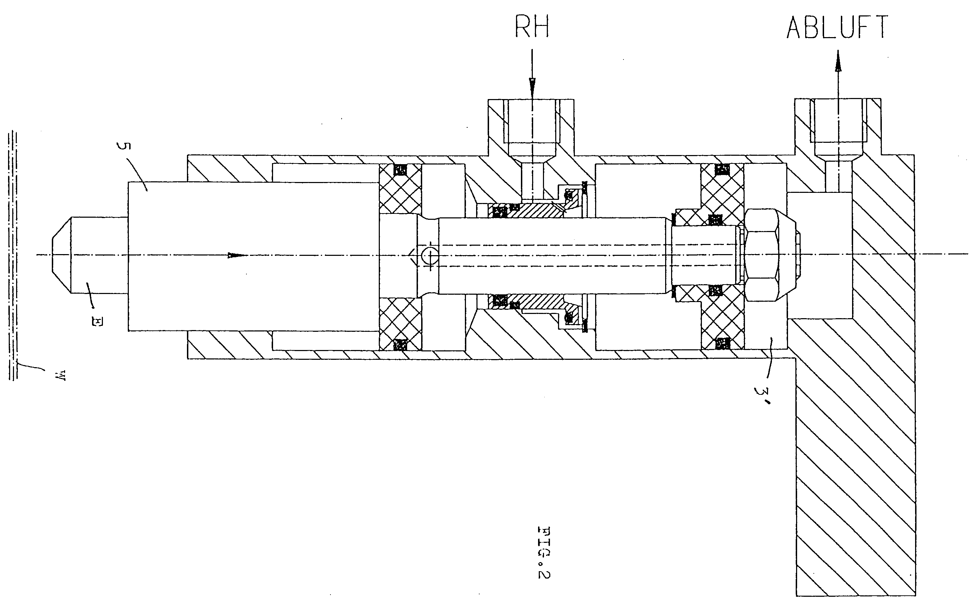

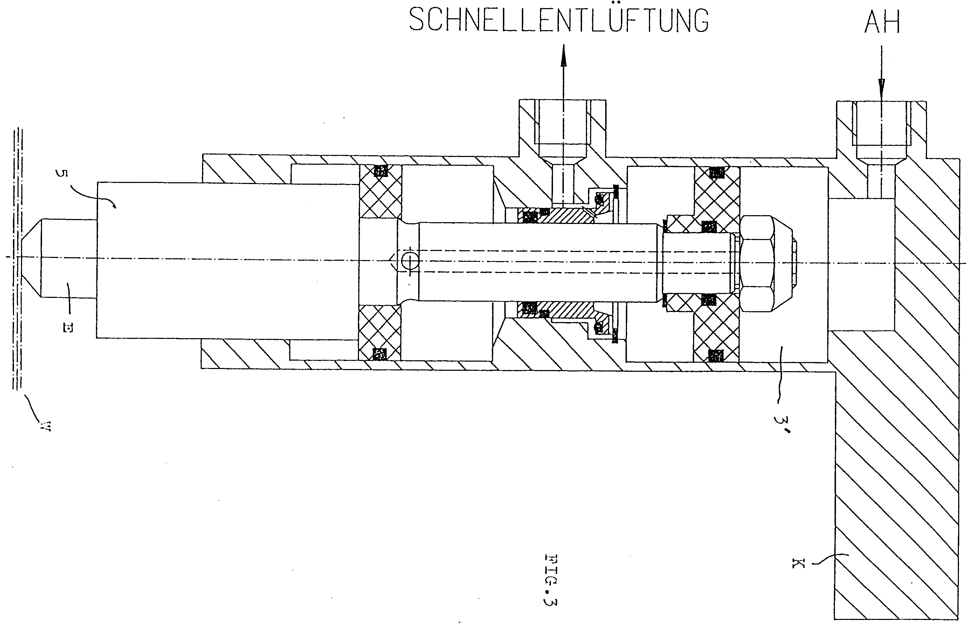

Ausgehend von der Ausgangsstellung gemäß Fig. 1 arbeitet der Pneumatikantrieb wie folgt:
Vom Druckmediumsanschluß I aus wird Preßluft aufgegeben, mit der der Kolben 6, aber auch der Kolben 7 via Kanal 8 beaufschlagt werden. Die Absenkung der Tandemkolbenanordnung erfolgt bei geschlossener Ventilhülse 11, die vom unter dem Kolben 6 herrschenden Druck in Schließstellung zum Anschlag 13 gehalten wird, wobei aber die Luft unter dem Kolben 6 durch die Drosselleitung 15 entsprechend gedrosselt direkt zum Anschluß II abströmt. Beim Aufsetzen der Elektrode E auf das Werkstück W können sich die Kolben 6, 7 nicht weiterbewegen. Durch den oberhalb des unteren Kolbens 7 weiter anstehenden Druck öffnet sich jedoch die Ventilhülse 11 und verschiebt sich auf der Kolbenstange 6' bis zum Anschlag 12. Dies führt zu einer Schnellentlüftung des Raumes 3 durch den Anschluß II (siehe Stellung gemäß Fig. 3). Nach Umsteuern des hier nicht dargestellten Ventiles wird der Rückhub in Richtung gemäß Ausgangsstellung nach Fig. 1 eingeleitet. Der Kolben 6 wird von seiner Unterseite her mit Druck beaufschlagt, und es wird der über dem Kolben 6 befindliche Raum 3' gegen Atmosphäre geöffnet. Wenn der Kolben 6 seine Höchststellung gemäß Fig. 1 erreicht hat, herrscht am Dichtungsflansch 14 ein Differenz-druck, da die zum Raum 3 weisende Fläche größer ist als die zum Anschlag 13 weisende, d.h. aber, die Ventilhülse 11 geht wieder in Schließstellung. Danach wird das nicht dargestellte Steuerventil an den Anschlüssen I II umgesteuert, und der Vorgang wiederholt sich wie beschrieben. Die Bezugszeichen sind in den Fig. 2, 3 nicht nochmals durchgehend wiederholt angegeben, da entsprechend. Die Fig. 2 verdeutlicht eine Zwischenstellung beim Rückhub. Bei einer entsprechenden Stellung befindet sich beim Absenken gegen das Werkstück W die Ventilhülse 11 in Schließstellung.

## Patentansprüche

1. Pneumatikantrieb, insbesondere für die Betätigung von Schweißelektroden, bestehend aus einem Zylinder (1) mit ventilgesteuerten Betriebsmittelzu- und -abführanschlüssen, in dessen durch eine Trennwand (2) in zwei Druckräume (3, 4) gegliederten Innenraum getrennt voneinander zwei an einer gemeinsamen, am freien Ende mit einer Werkzeugaufnahme (5) versehenen Kolbenstange (6') sitzende Kolben (6, 7) angeordnet sind, wobei die beiden Druckräume (3, 4) für den Vorschub durch einen Kanal (8) in der Kolbenstange (6') miteinander verbunden sind und im Bereich der Trennwand (2) eine mit einer Drossel (9) versehene, ventilgesteuerte, zum an der Trennwand (2) angeordneten Schnellentlüftungs- und Rückhubanschluß (10) führende Leitungsführung angeordnet ist,
**dadurch gekennzeichnet,**
daß in der Trennwand (2), gegen diese abgedichtet, eine die Kolbenstange (6') abgedichtet umfassende, begrenzt verschiebliche Ventilhülse (11) mit einem zwischen zwei Anschlägen (12, 13) an der Trennwand (2) beweglichen Dichtungsflansch (14) auf der Seite des ersten Druckraumes (3) angeordnet und in der Hülse (11) eine Drosselleitung (15) zwischen dem ersten Druckraum (3) und einem von einem zylindrischen Teil (11') der Hülse (11) und der Trennwand (2) begrenzten Überströmraum (16), unterhalb des Dichtungsflansches (14) ausmündend, angeordnet ist, in den der Schnellentlüftungs- und Rückhubanschluß (10) unterhalb des Dichtungsflansches (14) ausmündet.

2. Antrieb nach Anspruch 1,
**dadurch gekennzeichnet,**
daß der Anschlag (12) auf der Seite des Druckraumes (3) in Form eines in der Trennwand (2) eingesetzten Sprengringes (12') ausgebildet ist.

3. Antrieb nach Anspruch 1 oder 2,
**dadurch gekennzeichnet,**
daß die Ventilhülse (11) bis zum Dichtungsflansch (14) zylindrisch ausgebildet ist und am unteren Endbereich des zylindrischen Teiles (11') eine Dichtung (17) zur Kolbenstange (6') und eine Dichtung (18) zur Trennwand (2) angeordnet sind.

4. Antrieb nach einem der Ansprüche 1 bis 3,
**dadurch gekennzeichnet,**
daß im Dichtungsflansch (14) zur Seite des Anschlages (13) hin eine O-Ring-Dichtung (14') angeordnet ist.

5. Antrieb nach einem der Ansprüche 1 bis 4,
**dadurch gekennzeichnet,**
daß in der Ventilhülse (11) auf der Seite des Druckraumes (3) eine ringförmige Ausnehmung (19) angeordnet ist, von der aus die Drosselleitung (15) als Schrägbohrung zum Überströmraum (16) geführt ist.

## Claims

1. A pneumatic drive, in particular, for the operation of welding electrodes, comprising a cylinder (1) including valve-controlled connections for the supply and discharge of operating fluid, the interior of which cylinder divided by a partition (2) into two pressure chambers (3,4) accommodates two separately arranged pistons (6,7) seated on a common piston rod (6') provided on the free end thereof with a work accommodating unit (5), with the two pressure chambers (3,4) being interconnected for the advance movement through a passageway (8) in the piston rod (6'), and a valve-controlled conduit guide provided with a constrictor (9) and leading to the high-speed ventilating and return stroke connection (10) arranged on the partition (2) being provided in the area of the partition (2), characterized in that sealingly arranged on the side of the first pressure chamber (3), within the partition (2), is a limitedly displaceable valve sleeve (11) sealingly enclosing the piston rod (6') and provided with a sealing flange (14) movable between two stops (12,13) on the partition (2), and that arranged within the sleeve ((11) is a constricting conduit (15) between the first pressure chamber (3) and an overflow chamber (16) confined by a cylindrical part (11') of the sleeve (11) and the partition (2), so as to terminate underneath the sealing flange (14) in which the high-speed ventilating and return stroke connection (10) terminates below the sealing flange (14).

2. A drive according to claim 1, characterized in that the stop (12) on the side of the pressure chamber (3) is in the form of a snap ring (12') inserted in the partition (2).

3. A drive according to claims 1 or 2,
characterized in that the valve sleeve (11) down to the sealing flange (14) is of a cylindrical configuration, and that a sealant (17) sealing against the piston rod (6') and a sealant (18) sealing against the partition (2) are arranged at the bottom end of the cylindrical part (11').

4. A drive according to any one of claims 1 to 3,
characterized in that an O-ring gasket (14') is arranged in the sealing flange (14) for sealing against the side of the stop (13).

5. A drive according to any one of claims 1 to 4, characterized in that an annular recess (19) is provided in the valve sleeve (11) on the side of the pressure chamber (3), from where the constricting conduit (15) in the form of an angle bore is guided to the overflow chamber (16).

## Revendications

1. Entraînement pneumatique, en particulier pour l'actionnement d'électrodes de soudure, constitué par un cylindre (1) avec des raccords d'arrivée et d'évacuation de moyens d'exploitation commandés par des soupapes, dans l'espace intérieur séparé par une cloison de séparation (2) en deux espaces de pression (3, 4) duquel deux pistons (6, 7) sont placés en étant séparés l'un de l'autre en étant calés sur une tige de piston (6') commune, pourvue à l'extrémité libre d'un logement pour outil (5), les deux espaces de pression (3, 4) pour l'avance étant reliés l'un à l'autre par un canal (8) dans la tige de piston (6') et une conduite pourvue d'un clapet d'étranglement (9), commandée par soupape, qui mène au raccord d'aération rapide et de course de retour (10), placé sur la cloison de séparation (2) étant placée dans la zone de la cloison de séparation (2),
caractérisé en ce
qu'une douille de soupape (11), translatable de manière limitée, qui entoure la tige de piston (6') de manière étanchée, est placée dans la cloison de séparation (2) en étant étanchée contre celle-ci, avec une bride d'étanchéité (14) mobile entre deux butées (12, 13) sur la cloison de séparation (2) sur le côté du premier espace de pression (3) et qu'une conduite d'étranglement (15) est placée dans la douille (11) entre le premier espace de pression (3) et un espace de trop-plein (16) délimité par une partie cylindrique (11') de la douille (11) et la cloison de séparation (2), en débouchant au-dessous de la bride d'étanchéité (14) dans laquelle le raccord d'aération rapide et de course de retour (10) débouche au-dessous de la bride d'étanchéité (14).

2. Entraînement selon la revendication 1,
caractérisé en ce
que la butée (12) est configurée sur le côté de l'espace de pression (3) sous forme d'un jonc (12') mis en place dans la cloison de séparation (2).

3. Entraînement selon la revendication 1 ou 2,
caractérisé en ce
que la douille de soupape (11) est configurée cylindrique jusqu'à la bride d'étanchéité (14) et qu'une étanchéité (17) vers la tige de piston (6') et une étanchéité (18) vers la cloison de séparation (2) sont placées dans la zone d'extrémité inférieure de la partie cylindrique (11').

4. Entraînement selon l'une des revendications 1 à 3,
caractérisé en ce
qu'un anneau torique d'étanchéité (14') est placé dans la bride d'étanchéité (14) vers le côté de la butée (13).

5. Entraînement selon l'une des revendications 1 à 4,
caractérisé en ce
qu'un évidement annulaire (19) est placé dans la douille de soupape (11) sur le côté de l'espace de pression (3), évidement à partir duquel la conduite d'étranglement (15) est guidée comme forure inclinée vers l'espace de trop-plein (16).
